# EUROPEAN PATENT APPLICATION

(11) **EP 4 797 379 A1**
(43) Date of publication of application: **26.08.2026**
(21) Application number: 26156122.9
(22) Date of filing: 03.02.2026
(51) Int. Cl.: H01M 10/44, H01M 4/36, H01M 4/58, H01M 10/0525, H01M 10/48

(54) **LITHIUM MANGANESE IRON PHOSPHATE (LMFP) BATTERY SYSTEM FOR HEAVY DUTY APPLICATIONS**

(30) Priority: 07.02.2025 US 202563755883 P
(71) Applicant: Cummins, Inc., Columbus, Indiana 47201 (US)
(72) Inventor: Zhang, Ruigang, Columbus, 47201 (US); Chen, Jie, Columbus, 47201 (US); Walker, Matthew Allen, Columbus, 47201 (US)
(74) Representative: Cleveland Scott York

(57) **Abstract**

Systems and methods are disclosed for recovering lithium inventory and extending the operational life of lithium manganese iron phosphate (LMFP) batteries exhibiting multiphase electrochemical behavior. In example implementations, a battery cell configured with LMFP cathode materials having phase-dependent lithium transport characteristics undergoes a controlled recovery operation initiated in response to aging indicators. The recovery operation includes regulating the battery cell to a defined elevated temperature range for at least one phase of a multiphase reaction and directing a charging process while the cell is within the temperature range to promote lithium-ion migration from less accessible regions to active electrochemical sites. In some implementations, the charging process includes a low-rate charge followed by a normal-rate discharge. The disclosed techniques may be implemented by a battery management system and are applicable to vehicle, industrial, and stationary energy storage systems to improve capacity retention, operational stability, and lifecycle performance of aged LMFP batteries.

## Description

### Cross-Reference to Related Applications

This application claims the benefit of U.S. Provisional Patent Application No. 63/755,883, filed on February 7, 2025, and entitled "Lithium Manganese Iron Phosphate (LMFP) Battery System for Heavy Duty Applications," the entire disclosure of which is hereby incorporated by reference in its entirety.

### Technical Field

This invention relates to energy storage systems for electric vehicles (EVs). Specifically, it pertains to the design, composition, and integration of Lithium Manganese Iron Phosphate (LMFP) batteries for enhanced performance, safety, and sustainability in EV applications.

### Background

The adoption of EVs has significantly increased, driven by the need for sustainable transportation. Lithium-ion batteries (LIBs) dominate the EV market due to their high energy density and efficiency. However, existing LIB chemistries, such as Lithium Nickel Manganese Cobalt Oxide (NMC) and Lithium Iron Phosphate (LFP), face challenges in balancing cost, thermal stability, energy density, and sustainability.

LMFP batteries offer a promising solution by combining the inherent thermal stability of LFP with the enhanced energy density imparted by manganese doping. Despite these advantages, integration into EV systems has been limited by challenges in optimizing material synthesis, electrode design, and vehicle-level management systems.

### Summary

This disclosure provides a novel LMFP battery system tailored for EVs. It addresses key challenges through advancements in cathode material composition, cell architecture, thermal management, and battery management systems (BMS). The system provides a range of notable advantages, including improved energy density through the optimized synthesis of LMFP cathode materials, making it competitive with NMC chemistries. It offers extended cycle life and enhanced calendar stability, achieved through advanced doping techniques and precise electrode formulations. Superior thermal properties ensure exceptional stability, significantly reducing the risk of thermal runaway and enhancing overall safety. Cost-effectiveness is another key benefit, as the system minimizes reliance on expensive materials such as cobalt and nickel, promoting sustainability and reducing production expenses. Additionally, its modular design allows seamless scalability, enabling integration into a variety of electric vehicle platforms.

According to principles of the present disclosure, aged LMFP battery capacity can be recovered through a battery heat treatment process. This process is readily conducted with current battery thermal management and BMS systems.

### Brief Description of the Drawings

FIG. 1 is a diagram showing several discharge curves for an aged LMFP battery;
FIG. 2 shows a diagram of discharge capacity relative to cycle number with a heat treatment;
FIG. 3 is a diagram showing a Li-ion recovery process for aged batteries according to principles of the present disclosure;
FIG. 4 is a flowchart of an example process, according to principles of the present disclosure; and
FIG. 5 is a flowchart of a method for effective battery recovery.
FIG. 6 is a schematic diagram of an electrified vehicle.

### Detailed Description:

LMFP battery devices, systems, and methods disclosed herein leverage advanced materials and manufacturing techniques to optimize performance and reliability. At its core, the cathode and anode form the essential components of the battery. The cathode is the positive electrode and serves as the source of lithium ions during discharge. It is designed to host manganese, iron, and phosphate in a uniform distribution to maximize capacity and cycle life. Nanostructuring the cathode increases its surface area, facilitating faster ion transport and reduced charge transfer resistance, which makes it suitable for high-rate applications. The cathode material can be synthesized through a co-precipitation method, ensuring a consistent composition that enhances stability and longevity. This is just one of many cathode material preparation methods that can be used in the cells for this test. If follows that this disclosure is appliable for the LMFP cells with different cathode preparation method.

The anode, on the other hand, is the negative electrode of the battery and acts as the recipient of lithium ions during discharge. It is constructed using advanced silicon-carbon composites, which offer superior energy storage capabilities compared to traditional graphite. In examples, an LMFP cell can have a graphite anode. The heat treatment method can be applicable for LMFP cells with different anode materials. This composition enables the battery to achieve a balance between energy density and cycle life. The electrolyte in the system, infused with stabilizing additives, forms a solid electrolyte interphase (SEI) on the anode to protect it from degradation and to improve thermal properties.

The cathode material undergoes high-temperature solid-state reactions for synthesis, where precursors are calcined in controlled environments to achieve the desired crystalline structure. The particles are coated with conductive carbon to improve electron transport and durability. Additionally, doping with elements such as magnesium or zirconium enhances the structural integrity of the material, enabling it to withstand repeated charge and discharge cycles without significant degradation.

Electrode fabrication integrates these materials into a cohesive system. The active material is mixed with conductive additives and binders to form a slurry, which is uniformly applied to a current collector. This ensures consistent thickness and minimal defects. After drying and calendaring, the electrodes are assembled into cells that can be cylindrical, prismatic, or pouch-shaped, depending on the application requirements.

Thermal management in the battery system is vital to maintaining operational safety and efficiency. The thermal management system (TMS) incorporates phase change materials to absorb excess heat during high-demand scenarios, and a liquid cooling system ensures even heat distribution throughout the battery pack. Embedded thermal sensors provide real-time data to the battery management system (BMS), which dynamically adjusts operations to optimize thermal performance.

The BMS is a sophisticated control system that monitors and manages the battery's state of charge (SOC) and state of health (SOH). Using advanced algorithms, the BMS can predict performance trends and detect potential issues, ensuring the battery remains within safe operating conditions. Active cell balancing within the BMS extends the overall lifespan of the system by equalizing the charge across all cells, preventing overcharging and undercharging.

To ensure compatibility with various electric vehicle platforms, the battery pack is modular in design. Each module is self-contained with its own control systems, allowing scalability to meet different energy and power requirements. This modular approach simplifies maintenance and recycling, enhancing the sustainability of the overall system.

The electrolyte formulation is a crucial aspect of the battery's performance. High-voltage electrolytes, augmented with advanced additives, stabilize the cathode interface and prevent decomposition at elevated voltages. This extends the battery's operational range and improves energy density without compromising safety. The separator, chosen for its thermal stability and low resistance, enhances safety by preventing internal short circuits while promoting efficient ion transport.

Integrating LMFP batteries into electric vehicles requires standardizing interfaces and ensuring compatibility with existing charging infrastructure. The battery supports fast-charging capabilities, reducing downtime for vehicle owners. Furthermore, the system's inherent resistance to thermal runaway, due to its stable crystal structure and high decomposition temperature, provides an additional layer of safety.

Rigorous quality control during manufacturing ensures high reliability. Each cell undergoes comprehensive testing for capacity, impedance, and thermal stability. Automated inspection systems identify and address potential defects, ensuring consistent performance across all manufactured units.

Sustainability is a cornerstone of the LMFP battery system. By minimizing the use of cobalt and nickel, the environmental and ethical concerns associated with their extraction are reduced. The relatively straightforward composition of the LMFP material facilitates recycling, enabling efficient recovery of key components such as lithium, manganese, and iron.

The LMFP battery system represents a transformative advancement in energy storage technology for electric vehicles. By addressing the limitations of existing lithium-ion batteries, it offers a pathway to safer, more efficient, and sustainable transportation solutions. Each component, from the cathode and anode to the electrolyte and thermal management system, has been meticulously engineered to meet the demanding requirements of modern electric vehicles, setting a new benchmark in performance and reliability.

LMFP battery chemistry is desirable for next-generation solutions, owing to its exceptional attributes such as cost-effectiveness, robust safety profile, and outstanding long-life performance. These qualities make LMFP a promising candidate for addressing the growing demands of advanced energy storage systems.

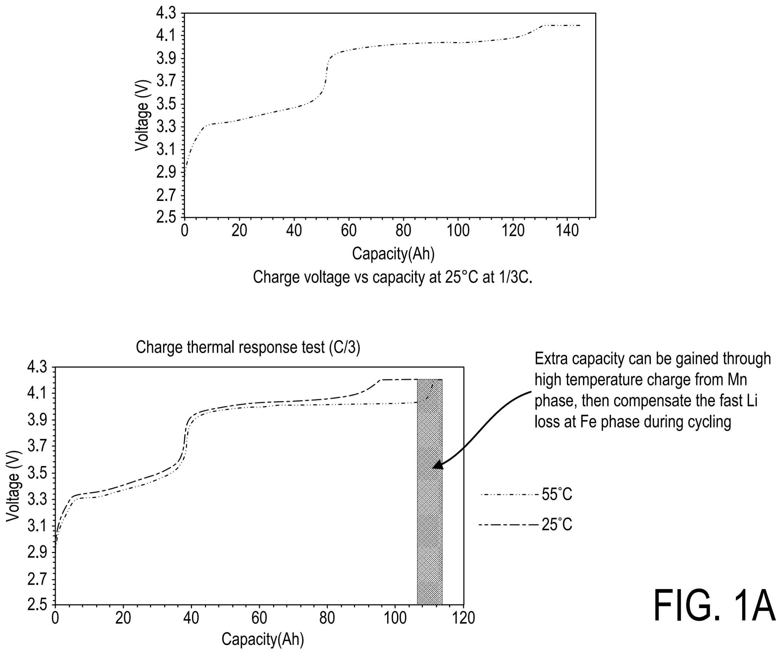

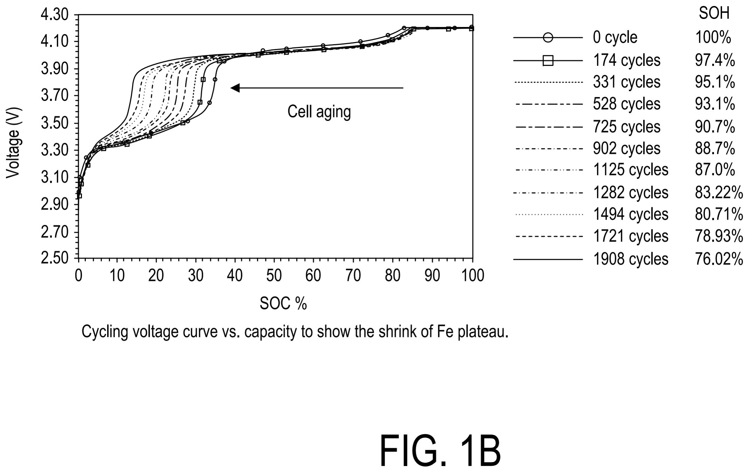

FIG. 1 is a diagram showing several discharge curves for an aged LMFP battery. Such batteries can include batteries cell for different chemistries, including Mn-Fe ratios. The results in FIG. 1 relate to soothing voltage during transition area by mixing the cathode materials with different Mn:Fe ratio. All lithium-ion batteries experience capacity degradation over prolonged cycling. This decline is primarily attributed to the loss of lithium-ion inventory, which accounts for approximately 95% of the capacity decay in LMFP cells. In the LMFP chemistry, two distinct voltage plateaus are observed: 3.9 V and 3.3 V, corresponding to the lithium reactions with manganese (Mn) and iron (Fe), respectively. However, due to intrinsic differences between Mn and Fe, the reactivity of lithium with these elements varies significantly. Specifically, the diffusivity of lithium ions in the Mn phase is 2-3 orders of magnitude slower than in the Fe phase.

In examples, as is the case with FIG. 1, principles of the present disclosure relate to smoothing a stair-like voltage in LMFP technology with a blended cathode material. More particularly, the present disclosure relates to smooth steep voltage transitions of LMFP batteries through blending different LMFP cathode materials with various ratios. Voltage transitions in LMFP batteries are a defining characteristic that enhances their operational stability and efficiency. During charge and discharge cycles, the lithium ions transition between the anode and cathode through a series of voltage plateaus, which are governed by the redox reactions of manganese and iron within the cathode material. These transitions occur at distinct voltage levels due to the multi-electron processes involved, offering a stable energy delivery profile. The presence of manganese increases the operational voltage range, while iron ensures cost-effectiveness and structural durability. This balance allows LMFP batteries to achieve higher energy densities without compromising cycle life. Additionally, the stable voltage transitions reduce the stress on the electrolyte, minimizing degradation and extending the battery's lifespan. In examples, the cathode materials can be blended cathode materials formed from first and second similar cathode materials.

However, the stair-step nature of the voltage profile presents a significant challenge in practical applications. This distinct voltage behavior complicates the precise monitoring of the SOC and the accurate control of power output. For battery engineers, a smoother, slope-like voltage curve is highly desirable, as it facilitates more efficient BMS development, enabling improved operational control and reliability.

To address this issue, the concept of blending LMFP with Nickel Manganese Cobalt (NMC) has been proposed to smooth out the sharp voltage transitions. Despite these efforts, the characteristic stair-like voltage profile remains evident. Moreover, incorporating NMC into the blend introduces additional trade-offs, including reduced safety performance, a shorter cycle life, and increased production costs. These challenges highlight the need for further innovation and optimization to fully harness the potential of LMFP batteries while mitigating these limitations.

However, the stair-step nature of the voltage profile presents a significant challenge in practical applications. This distinct voltage behavior complicates the precise monitoring of the SOC and the accurate control of power output. For battery engineers, a smoother, slope-like voltage curve is highly desirable, as it facilitates more efficient BMS development, enabling improved operational control and reliability.

This disparity in lithium-ion mobility leads to two noteworthy challenges during the operation of LMFP batteries. At room or low temperatures, a substantial portion of lithium ions becomes inaccessible at the high-voltage plateau, as the sluggish diffusivity in the Mn phase restricts their mobility. These immobilized lithium ions are often regarded as either a lithium reservoir or inactive, contributing to the effective loss of active lithium.

Conversely, the Fe phase, characterized by its rapid lithium-ion diffusivity and high reactivity, experiences a more accelerated degradation. As a result, the voltage plateau associated with the Fe phase undergoes a pronounced decline over time, further compounding the capacity fade observed in LMFP batteries.

According to principles of the present disclosure, the lithium reservoir at high voltage Mn phase is accessible through one-time high temperature, low C rate charging. It follows that when discharging the battery at normal operation temperature, the activated Lithium ions from the lithium reservoir will compensate the lithium inventory loss at the Fe phase because Lithium ions have much higher diffusivity at Fe phase than that at Mn phase. In this way, extra energy from aged LMFP batteries can be gained to extend its operation life. Extra capacity can be gained through high temperature charge from Mn phase, then compensate the fast Li loss at Fe phase during cycling.

Validation of these principles can be carried out using the following multistep process:
1. Use an aged LMFP cell (with 90% state of charge (SOH))
2. Run 3 cycle at 25°C to measure the initial capacity: charge (atC/3 to 4.2V till C/20)/discharge at C/3 till 2.5V.
3. Charge the battery at 45°C with C/10 to 4.2V, CV cut off at C/20
4. Discharge with C/3 to 2.5V at 25 °C. Battery capacity is completed.
5. Resume the normal operation.

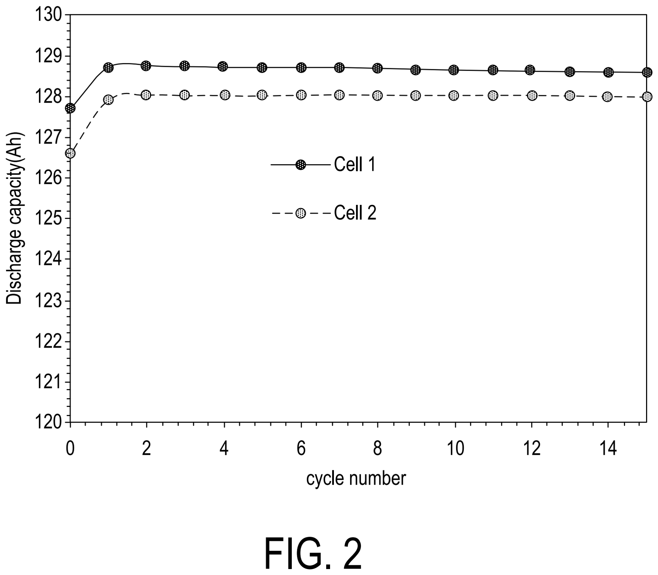

FIG. 2 shows a diagram of discharge capacity relative to cycle number with a heat treatment, which corresponds to the following tables with cycling results with 1CCV/1C:

**TABLE 1: First set of results for effects of thermal treatment on the cell capacity recovery**

| Discharge-Cell 1 | Discharge capacity (Ah) | SOH% |
|---|---|---|
| Before heat treatment | 127.4 | 87.76 |
| After heat treatment | 128.8 | 88.72 |
| Δ | 1.4 | 1.0 % |

**TABLE 2: Second set of results for effects of thermal treatment on the cell capacity recovery**

| Discharge-Cell 2 | Discharge capacity (Ah) | SOH% |
|---|---|---|
| Before heat treatment | 126.6 | 87.57 |
| After heat treatment | 128.0 | 88.54 |
| Δ | 1.4 | 1.0% |

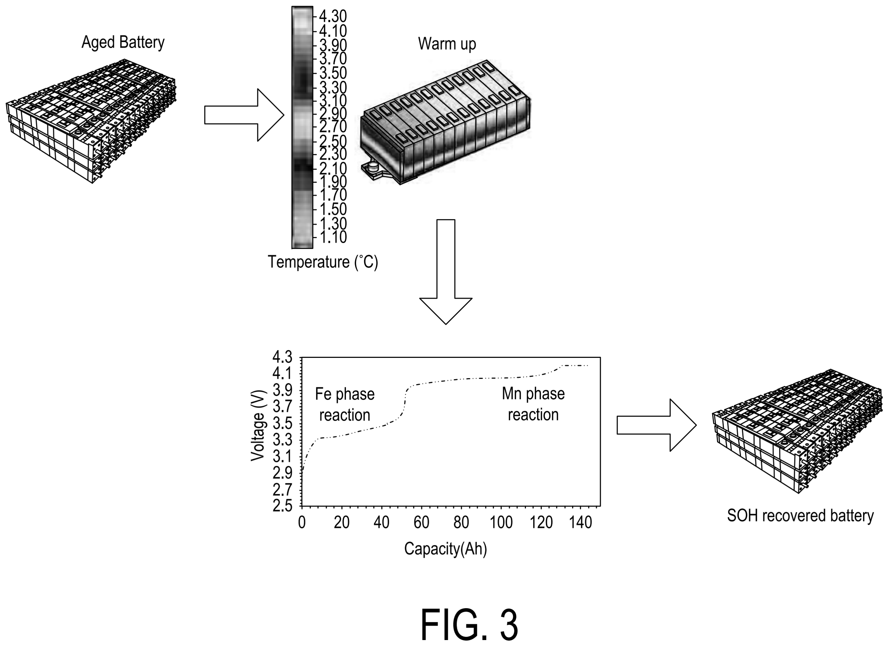

FIG. 3 is a diagram showing a Li-ion recovery process for aged batteries according to principles of the present disclosure. To begin, an aged battery is selected. Then the aged battery is warmed up. Next, a recovery process is performed at high temperature. Notably, this process can include a one-time slow charge (e.g., at C/20 or similar) and a one-time normal rate discharge (e.g., at C/3 or similar). The warm-up procedures can be defined in different scenarios: where the aged battery is warmed for an entirety of the charging process or where the battery is only warmed at Mn phase charging.

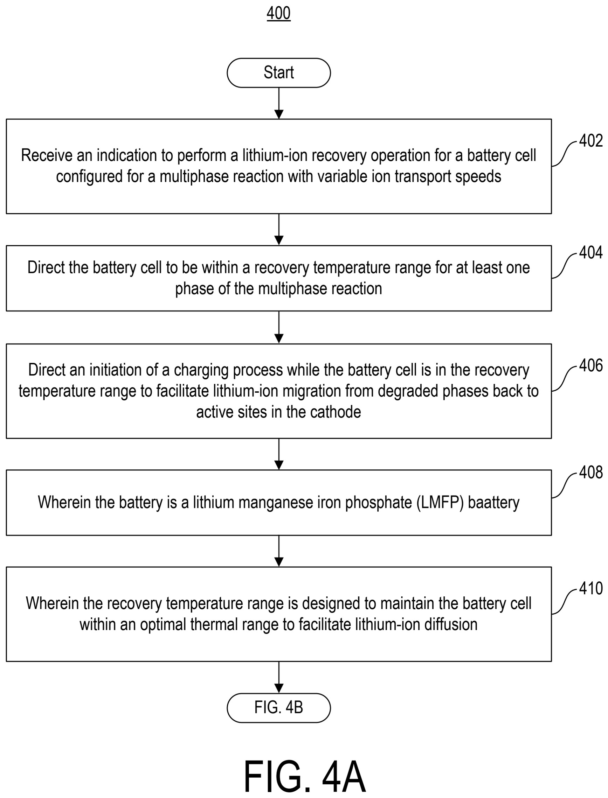

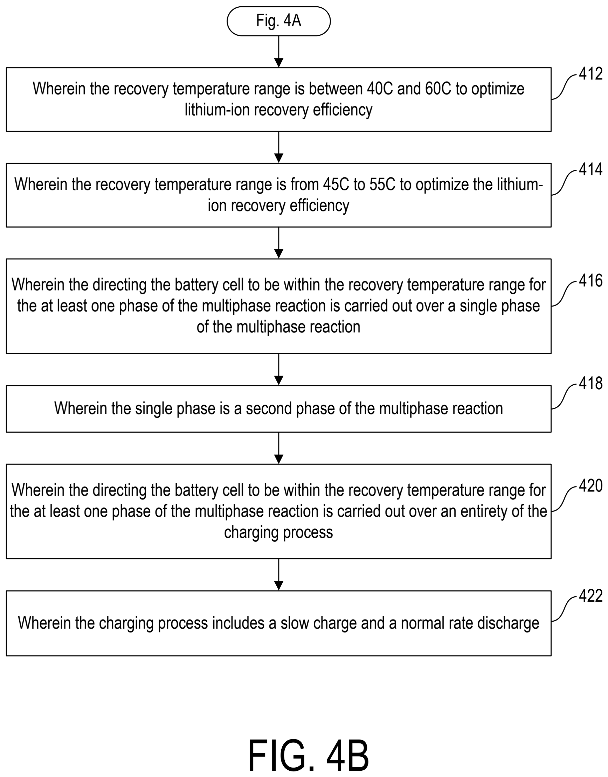

FIG. 4 is a flowchart of an example process 400. FIG. 4 includes a first section of the flowchart shown in FIG. 4A and the second section of the flowchart shown in FIG. 4B. In some implementations, one or more process blocks of FIG. 4 may be performed by a battery management system.

As shown in FIG. 4, process 400 may include receiving an indication to perform a lithium-ion recovery operation for a battery cell having blended cathode materials configured for a multiphase reaction with variable ion transport speeds, the blended cathode materials are formed from first and second similar cathode materials (block 402). For example, battery management system may receive an indication to perform a lithium-ion recovery operation for a battery cell having blended cathode materials configured for a multiphase reaction with variable ion transport speeds, the blended cathode materials are formed from first and second similar cathode materials, as described above. As also shown in FIG. 4, process 400 may include directing the battery cell to be within a recovery temperature range for at least one phase of the multiphase reaction (block 404). For example, battery management system may direct the battery cell to be within a recovery temperature range for at least one phase of the multiphase reaction, as described above. As further shown in FIG. 4, process 400 may include directing an initiation of a charging process while the battery cell is in the recovery temperature range to facilitate lithium-ion migration from degraded phases back to active sites in the cathode (block 406). For example, battery management system may direct an initiation of a charging process while the battery cell is in the recovery temperature range to facilitate lithium-ion migration from degraded phases back to active sites in the cathode, as described above.

Process 400 may include additional implementations, such as any single implementation or any combination of implementations described below and/or in connection with one or more other processes described elsewhere herein. In a first implementation, the battery is a lithium manganese iron phosphate (LMFP) battery.

In a second implementation, alone or in combination with the first implementation, the , the blended cathode materials are formed from first and second similar cathode materials.

In a third implementation, alone or in combination with the first and second implementation, the recovery temperature range is between 40 degrees Celsius and 60 degrees Celsius to optimize lithium-ion recovery efficiency. In examples, the capacity recovery method may be applicable in cases where the temperature during the heat treatment step is higher than that in the cycle life testing.

In a fourth implementation, alone or in combination with one or more of the first through third implementations, the recovery temperature range is from 45 degrees Celsius to 55 degrees Celsius to optimize the lithium-ion recovery efficiency.

In a fifth implementation, alone or in combination with one or more of the first through fourth implementations, the directing the battery cell to be within the recovery temperature range for the at least one phase of the multiphase reaction is carried out over a single phase of the multiphase reaction.

In a sixth implementation, alone or in combination with one or more of the first through fifth implementations, the single phase is a second phase of the multiphase reaction.

In a seventh implementation, alone or in combination with one or more of the first through sixth implementations, the directing the battery cell to be within the recovery temperature range for the at least one phase of the multiphase reaction is carried out over an entirety of the charging process.

In an eighth implementation, alone or in combination with one or more of the first through seventh implementations, the charging process includes a slow charge and a normal rate discharge.

Although FIG. 4 shows example blocks of process 400, in some implementations, process 400 may include additional blocks, fewer blocks, different blocks, or differently arranged blocks than those depicted in FIG. 4. Additionally, or alternatively, two or more of the blocks of process 400 may be performed in parallel.3

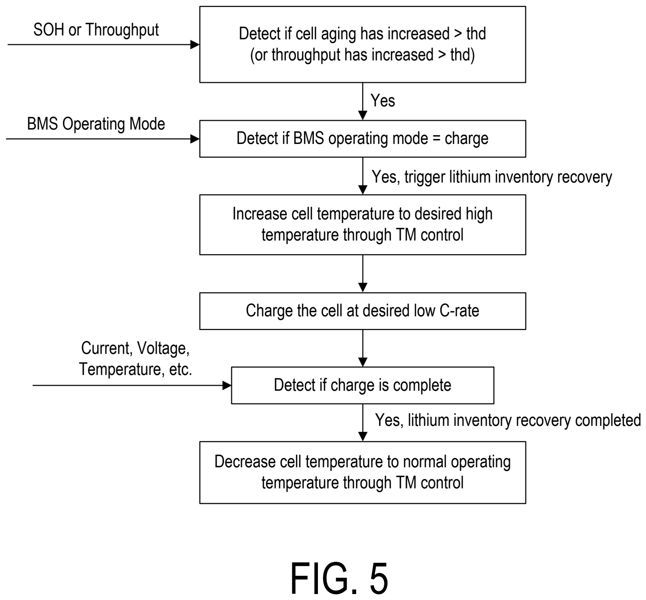

FIG. 5 is a flowchart of a method for effective battery recovery. Effective battery recovery requires careful regulation of key parameters to optimize lithium-ion redistribution, minimize degradation, and restore battery performance. The recovery process involves a sequence of controlled steps designed to enhance lithium mobility, reduce internal resistance, and improve overall energy retention.

Aged lithium-ion batteries should be warmed to a temperature of at least 35°C before initiating the recovery process. This controlled heating reduces electrolyte viscosity, enhances ion mobility, and accelerates lithium-ion diffusion within the electrode materials. At lower temperatures, lithium transport within the anode and cathode becomes sluggish, increasing the risk of incomplete lithium reintegration and further capacity loss. By maintaining the battery within an optimal thermal range, recovery efficiency can be significantly improved.

During the recovery phase, a lower current charging rate, typically at or below C/10, should be applied. This gentle charging strategy reduces stress on aged electrode materials, preventing excessive lithium plating on the anode surface. High charging currents in degraded batteries can lead to lithium metal deposition, increasing impedance and reducing cycle life. By maintaining a reduced current, the lithium ions are given sufficient time to redistribute evenly across active sites, improving the cell's overall stability and recoverable capacity.

Once the battery has undergone controlled low-current charging, it should be fully charged to ensure maximum lithium-ion reintegration into the cathode structure. Achieving a full state of charge allows the electrode materials to reach equilibrium, stabilizing their electrochemical properties. This step is essential to reestablish the proper balance of active lithium ions within the cell, thereby extending battery lifespan and restoring lost capacity.

By implementing these parameters-temperature regulation, low-current charging, and complete charge cycles-battery recovery operations can be optimized to improve energy retention, enhance cycle stability, and prolong the usable life of lithium-ion cells.

The flowchart outlines a structured process for lithium inventory recovery within a battery management system (BMS). The process begins by monitoring the state of health (SOH) or throughput of the battery. If cell aging has increased beyond a predefined threshold ("thd") or if throughput surpasses a set limit, the system proceeds with the recovery process. Otherwise, no further action is taken. Once triggered, the system checks whether the BMS operating mode is set to "charge." If charging mode is detected, lithium inventory recovery is initiated.

To optimize lithium-ion mobility, the system increases the battery cell temperature to a predefined high level using thermal management (TM) control. Following this, the battery undergoes a controlled charging process at a low C-rate to facilitate lithium-ion reintegration while minimizing stress on electrode materials. Throughout the charging process, the system continuously monitors whether the charge cycle has been fully completed. If charging is incomplete, the process continues; however, if the charge is complete, lithium inventory recovery is considered successful. Finally, the system restores the battery cell to its normal operating temperature using thermal management control, ensuring that it returns to stable conditions for regular operation. This method enables efficient lithium inventory recovery while optimizing temperature and charge rate to extend battery life.

### Electrified Vehicle Overview

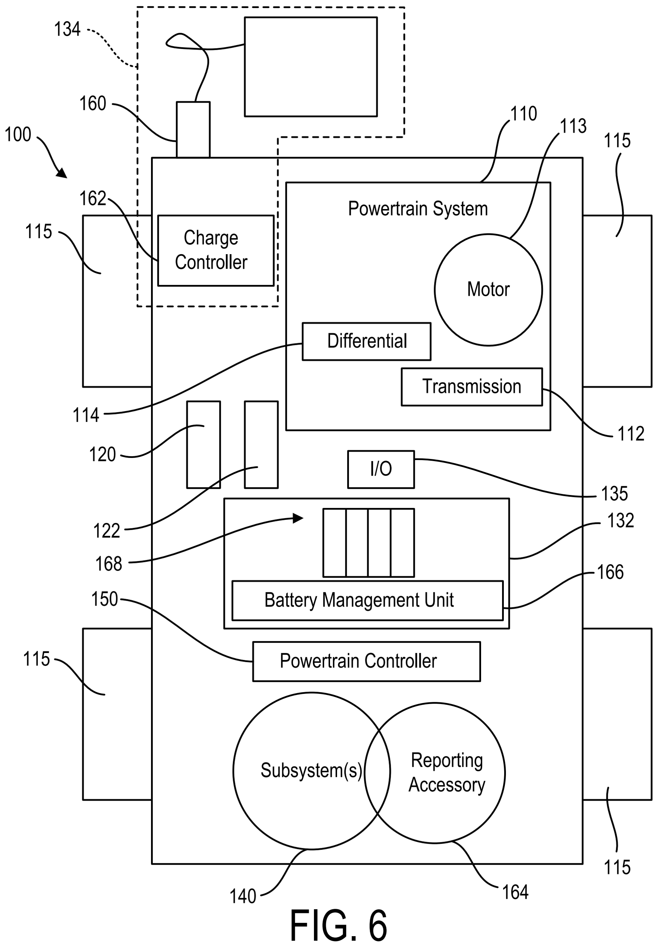

Referring initially to FIG. 6, a schematic diagram of a battery electric vehicle 100 is provided. While the vehicle is referred to as a battery electric vehicle, it is understood that the vehicle may alternatively be a hybrid vehicle, such as a plug-in hybrid vehicle, powered or otherwise operable via a battery and, optionally, one or more of a generator (e.g., power generator, generator plant, electric power strip, on-board rechargeable electricity storage system, etc.) and a motor (e.g., electric motor, traction motor, etc.). Battery electric vehicle 100 may be operable in at least one of a reverse direction (e.g., backward relative to the front end of the vehicle) and a non-reverse direction (e.g., forward or angular direction relative to the front end). Battery electric vehicle 100 may be an on-road or off-road vehicle, including but not limited to cars, trucks, ships, boats, vans, airplanes, spacecraft, or any other type of vehicle.

Battery electric vehicle 100 comprises a powertrain controller 150 communicably and operatively coupled to a powertrain system 110, a brake mechanism 120, an accelerator pedal 122, one or more sensors (not shown), an operator input/output (I/O) device 135, and one or more additional vehicle subsystems 140. Battery electric vehicle 100 may include additional, fewer, or different system components than those depicted in FIG. 6, such that the principles, methods, and apparatuses of the present disclosure are applicable to any suitable vehicle configuration. It should also be understood that the disclosed principles are not limited to on-highway vehicles; rather, they may be applied to other applications including, but not limited to, off-highway construction equipment, mining equipment, marine equipment, and locomotive equipment.

Powertrain system 110 facilitates power transfer from a battery 132 and/or a motor 113 to propel vehicle 100. In one embodiment, powertrain system 110 includes motor 113 operably coupled to battery 132 and charge system 134, where motor 113 transfers power to a final drive (e.g., wheels 115) to propel the vehicle. As shown, powertrain system 110 may further include a transmission 112 and/or differential 114, where differential 114 transfers power output from transmission 112 to final drive 115. Powertrain controller 150 supplies electrical power to motor 113 in response to inputs from accelerator 122, sensors, subsystems 140, and charge system 134 (e.g., a battery charging system or rechargeable battery). In some embodiments, electricity supplied to power motor 113 may alternatively or additionally be provided by an on-board gasoline-engine generator or a hydrogen fuel cell.

In certain embodiments, vehicle 100 includes transmission 112, which may be configured as any transmission type compatible with an electrified powertrain, including a continuously variable transmission, manual transmission, automatic transmission, automated-manual transmission, or dual-clutch transmission. Transmission 112 may provide multiple gear ratios or continuously variable settings that determine output speed based on engine or motor speed. Motor 113, differential 114, and final drive 115 may likewise take any configuration suitable for the vehicle type. In some examples, transmission 112 is omitted and motor 113 is directly coupled to differential 114; in others, motor 113 directly couples to final drive 115 in a direct-drive configuration. Vehicle 100 may also include multiple instances of motor 113-for example, one per driven wheel, one per driven axle, or other suitable arrangements.

Brake mechanism 120 may be implemented as any system or device configured to prevent or reduce motion by slowing or stopping a component of vehicle 100 (e.g., a wheel, axle, crankshaft, or driveshaft). Brake mechanism 120 is generally configured to receive an indication of a desired change in vehicle speed. In some embodiments, brake mechanism 120 comprises a brake pedal operable between a released state and an applied state by an operator of vehicle 100. The brake pedal may operate as a pressure-based system responsive to applied pressure or as a travel-based system responsive to a pedal travel distance, where the force applied to brake mechanism 120 is proportional to that pressure or distance. In certain embodiments, all or a portion of brake mechanism 120 is incorporated into motor 113 as a regenerative braking mechanism.

The released state of brake mechanism 120 corresponds to a brake pedal in a default position where braking is not applied-for example, when the operator's foot is not on the pedal or resting lightly below a minimum actuation force. In some embodiments, the brake pedal is combined with accelerator pedal 122 in a one-pedal driving configuration. The applied state corresponds to the pedal being pressed with a force or travel distance that meets or exceeds a minimum threshold to achieve braking. These thresholds prevent unintended actuation and may vary depending on implementation, such as higher force for a foot-actuated brake pedal and lower force for a hand-actuated lever.

A reduction in actuation force or travel distance may correspond to a desired increase in vehicle speed, while an increase corresponds to a reduction in vehicle speed.

Accelerator pedal 122 may be any torque- or speed-request device, such as a floor-based pedal, lever, or joystick. Sensors associated with accelerator 122 and/or brake mechanism 120 may include a vehicle-speed sensor, accelerator-position sensor (e.g., potentiometer), brake-position or pressure sensor, coolant-temperature sensor, pressure sensor, ambient-air-temperature sensor, or other suitable sensors.

Vehicle 100 may include an operator I/O device 135 that enables communication between the operator and powertrain controller 150. For example, device 135 may include an interactive display (e.g., touchscreen) with buttons, haptic feedback, and controls for acceleration, braking, shifting, cruise control, or navigation. Via device 135, powertrain controller 150 may transmit instructions, commands, or status information to the operator.

Vehicle 100 further includes one or more vehicle subsystems 140, which may include sensors (e.g., speed, pressure, or temperature sensors) and additional systems such as torque sensors for motor 113, transmission 112, differential 114, and/or final drive 115. Other subsystems 140 may include a steering subsystem, electrical subsystem, and a thermal management system comprising radiators, pumps, fans, heat exchangers, and controllers. Additional sensors may include cameras, LIDAR, RADAR, temperature sensors, smoke detectors, or virtual sensors.

Powertrain controller 150 is communicably coupled to powertrain system 110, brake mechanism 120, accelerator 122, I/O device 135, and subsystems 140 via wired or wireless connections (e.g., CAN bus, fiber optics, Wi-Fi, Bluetooth, or cellular). Controller 150 receives and processes data and may interface with an additional or alternative controller as needed.

In embodiments including charge system 134, such as a plug-in charging system, powertrain controller 150 manages charging of battery 132 when a charger 160 is connected to vehicle 100. A charge controller 162 establishes communication between controller 150 and charger 160, receiving charge commands, monitoring sensor signals, and performing safety and performance checks. Charge controller 162 may detect faults such as connection failures or unsafe boundaries and functions as a communication interface between charger 160 and controller 150.

Powertrain controller 150 may also communicate with charger 160, battery 132, and a reporting accessory 164 (e.g., subsystem 140 or another component) via a CAN bus or other communication scheme. Reporting accessory 164 may communicate identification information, current demand, voltage draw, and other operational parameters. Dynamic loads (e.g., an air-conditioning system) can report variable current demand to optimize charge commands and avoid under-delivery of current that extends charging time.

Battery 132 includes one or more battery packs, each having a battery management system 166 and one or more battery modules 168. Sensors monitor temperature, voltage, and current to allow system 166 to manage charging, detect faults, and report conditions such as power limits and temperatures to controller 150. The current sensor may reside within or outside battery 132 and may include multiple sensors whose readings are summed to yield total current.

Powertrain controller 150 may include charge logic operable to determine a command for charger 162 to supply target current to battery 132. This logic may reside within controller 150, within battery-management controller 166, or in a standalone controller. The term "logic," as used herein, encompasses hardware, firmware, or software executing on one or more processors or integrated circuits. A non-transitory machine-readable medium may store such logic and instructions.

A transport-control system and charging-management system may coordinate multiple chargers in a depot or fleet environment, managing vehicle arrival times, charging schedules, and grid load distribution to optimize cost and availability.

Although FIG. 6 is described in connection with a battery electric vehicle, the disclosed architecture may also apply to plug-in hybrid vehicles or other electrified powertrains incorporating an internal-combustion engine, transmission, and differential in combination with battery propulsion.

For purposes of this disclosure, the term "electrified vehicle" is used in an inclusive sense to refer to any vehicle employing an electrical energy storage and propulsion system, whether in full or partial form. Thus, although battery electric vehicle 100 is described in connection with the embodiment of FIG. 6, it should be understood that the same general systems and control principles are equally applicable to hybrid electric vehicles, plug-in hybrid electric vehicles, fuel-cell vehicles, or other architectures that integrate electrical propulsion or energy storage with mechanical power sources. The term also encompasses configurations in which electrical components are used for auxiliary or regenerative functions in vehicles that are otherwise mechanically driven. Accordingly, references to a "battery electric vehicle" in the following description should not be construed as limiting; rather, they are exemplary of a class of electrified vehicles to which the disclosed control systems, charging architectures, and subsystem integrations may be applied. One skilled in the art will appreciate that comparable functionality may be achieved in non-electrified or partially electrified systems where similar subsystems-such as powertrain controllers, charge controllers, or reporting accessories-are present.

In practice, this disclosure is applicable to EV manufacturers seeking cost-effective, safe, and sustainable battery solutions. The LMFP battery system supports increased adoption of EVs by addressing current limitations of LIB technologies. Thus, the present disclosure provides an advanced LMFP battery system that balances energy density, safety, and cost for EV applications. By overcoming existing challenges, it paves the way for broader adoption and enhanced performance in sustainable transportation. The following are several practical examples drawing upon some of the many principles discussed in this disclosure.

In Example 1, a method of extending a battery life of a battery comprising: receiving an indication to perform a lithium-ion recovery operation for a battery cell configured for a multiphase reaction with variable ion transport speeds; directing the battery cell to be within a recovery temperature range for at least one phase of the multiphase reaction; and directing an initiation of a charging process while the battery cell is in the recovery temperature range to facilitate lithium-ion migration from degraded phases back to active sites in the cathode.

In Example 2, the method as Example 1 describes, wherein the battery is a lithium manganese iron phosphate (LMFP) battery.

In Example 3, the method as either of Examples 1 or 2 describe, wherein the recovery temperature range is designed to maintain the battery cell within an optimal thermal range to facilitate lithium ion diffusion.

In Example 4, the method as any of Examples 1-3 describe, wherein the recovery temperature range is between 40C and 60C to optimize lithium-ion recovery efficiency.

In Example 5, the method as any of Examples 1-4 describe, wherein the recovery temperature range is from 45C to 55C to optimize the lithium-ion recovery efficiency.

In Example 6, the method as any of Examples 1-5 describe, wherein the directing the battery cell to be within the recovery temperature range for the at least one phase of the multiphase reaction is carried out over a single phase of the multiphase reaction.

In Example 7, the method as any of Examples 1-6 describe, wherein the single phase is a second phase of the multiphase reaction.

In Example 8, the method as any of Examples 1-7 describe, wherein the directing the battery cell to be within the recovery temperature range for the at least one phase of the multiphase reaction is carried out over an entirety of the charging process.

In Example 9, the method as any of Examples 1-8 describe, wherein the charging process includes a slow charge and a normal rate discharge.

In Example 10, a system for extending a battery life of a mixed chemistry battery comprising one or more components configured to: receive an indication to perform a lithium-ion recovery operation for a battery cell configured for a multiphase reaction with variable ion transport speeds, the blended cathode materials are formed from first and second similar cathode materials; direct the battery cell to be within a recovery temperature range for at least one phase of the multiphase reaction; and direct an initiation of a charging process while the battery cell is in the recovery temperature range to facilitate lithium-ion migration from degraded phases back to active sites in the cathode.

In Example 11, the system as Example 10 describes, wherein the battery cell is a lithium manganese iron phosphate (LMFP) battery cell.

In Example 12, the system as either of Examples 10 or 11 describe, wherein the recovery temperature range is designed to maintain the battery cell within an optimal thermal range to facilitate lithium ion diffusion.

In Example 13, the system as any of Examples 10-12 describe, wherein the recovery temperature range is between 40 degrees Celsius and 60 degrees Celsius to optimize lithium-ion recovery efficiency and thermal degradation during recovery.

In Example 14, the system as any of Examples 10-13 describe, wherein the recovery temperature range is from 45 degrees Celsius to 55 degrees Celsius to optimize the lithium-ion recovery efficiency and thermal degradation during recovery.

In Example 15, the system as any of Examples 10-14 describe, wherein the directing the battery cell to be within the recovery temperature range for the at least one phase of the multiphase reaction is carried out over a single phase of the multiphase reaction.

In Example 16, the system as any of Examples 10-15 describe, wherein the single phase is a second phase of the multiphase reaction.

In Example 17, the system as any of Examples 10-16 describe, wherein the directing the battery cell to be within the recovery temperature range for the at least one phase of the multiphase reaction is carried out over an entirety of the charging process.

In Example 18, the system as any of Examples 10-17 describe, wherein the charging process includes a slow charge and a normal rate discharge.

In Example 19, a battery management system (BMS) configured to perform a lithium-ion recovery in a mixed chemistry battery pack comprising: receiving an indication to perform a lithium-ion recovery operation for a battery cell configured for a multiphase reaction with variable ion transport speeds; directing the battery cell to be within a recovery temperature range for at least one phase of the multiphase reaction; and directing an initiation of a charging process while the battery cell is in the recovery temperature range to facilitate lithium-ion migration from degraded phases back to active sites in the cathode.

In Example 20, the BMS as Example 19 describes, wherein the lithium-ion recovery in a mixed chemistry battery pack further comprises at least one of: applying a controlled thermal management protocol to maintain the battery cell in the recovery temperature range; monitoring the temperature of the battery cell during recovery; monitoring a state of charge of the battery cell during recovery; monitoring a state of health of the battery cell during recovery; directing the charging process to include a slow charge; directing the charging process to include a normal rate discharge; performing a validation procedure to determine an amount of recovery; and employing real-time algorithms to adjust recovery protocols based on battery conditions.

### Practical Examples

The following examples illustrate representative implementations of the disclosed concepts, including material blending strategies, electrode-level structuring, pack-level control algorithms, and recovery or conditioning operations that improve LMFP battery performance. These examples are not limiting but instead demonstrate how the inventive principles may be applied in real manufacturing and operational environments to stabilize multiphase voltage transitions, harmonize diffusivity across LMFP phases, and improve state-of-charge estimation under demanding load conditions. Variations, substitutions, and equivalents that achieve substantially similar technical effects fall within the scope of the disclosure.

### Example 1: Blended-Cathode LMFP Cell for Heavy-Duty Drive Cycles

A 20 Ah prismatic LMFP cell is fabricated using a 2:1 Mn-rich to Fe-rich cathode blend to moderate the abrupt voltage plateau transitions characteristic of pure LMFP. The blended formulation exhibits reduced voltage step amplitude during transitions between the ~3.9 V Mn phase and the ~3.3 V Fe phase, resulting in smoother real-time SOC estimation in a heavy-duty truck application. Under a representative torque-pulse profile, the blended cell demonstrates less than 2.5% deviation in plateau-region voltage compared to the >6% deviation observed in a pure LMFP baseline. The smoother transition enables the vehicle's battery management system (BMS) to maintain torque consistency across repeated acceleration cycles.

### Example 2: Dual-Electrode-Stack Architecture for Phase-Harmonized Charge/Discharge

A pouch cell is constructed with two cathode stacks: one enriched in Mn for high-voltage energy density, and one enriched in Fe for improved stability and lower diffusion barriers. The stacks are separated by a shared anode with tailored compression interfaces to maintain uniform stack pressure. Under high-rate discharge (3C), the Mn-dominant stack experiences slower phase transition kinetics; the Fe-dominant stack compensates by providing lower-voltage current during the plateau transition, resulting in a synchronized composite voltage curve. This architecture reduces transient voltage oscillations during load steps, improving both thermal stability and pack-level balancing efficiency.

### Example 3: Pack-Level Balancing Algorithm for Mixed-Chemistry LMFP Modules

A heavy-duty battery pack contains modules with blended-LMFP cells exhibiting slightly different Mn/Fe ratios from manufacturing variation. The pack's BMS uses per-module impedance trending and plateau-shape identification to classify modules into narrower phase-behavior groups. During operation, the balancing algorithm shifts charge allocation toward modules with faster Fe-phase diffusivity when the vehicle approaches low SOC regions, thereby minimizing the risk of phase-transition bottlenecks. Field testing shows a 12% reduction in voltage-spread accumulation across modules during a Class-8 truck hill-climb simulation.

### Example 4: Temperature-Conditioned Recovery Cycle for Aged LMFP Cells

An aged LMFP module exhibiting reduced accessible capacity undergoes a controlled recovery process. The module is preheated to at least 35 °C to enhance ion mobility within the Fe-dominant phase. A low-current charge cycle at C/10 is applied to gradually reengage slower diffusion pathways and re-synchronize multiphase transitions. The module is then fully charged to allow the Mn and Fe reaction pathways to complete without interruption. Post-recovery testing shows a 6-9% improvement in capacity retention and materially smoother plateau transitions, resulting in more accurate downstream SOC estimation for fleet-operation use.

### Example 5: Automated Inline Formation Screening for Blended-Phase Consistency

During formation cycling at the cell factory, LMFP cells with blended chemistries are subjected to impedance spectroscopy and differential-capacity analysis at multiple SOC checkpoints. Cells exhibiting abnormal plateau-width ratios or unexpected Mn-to-Fe diffusivity skew are flagged for secondary inspection. Inline vision systems evaluate coating uniformity across the cathode; thermal probes confirm uniform temperature rise during early cycles. Cells passing all criteria proceed to pack assembly, while flagged cells undergo recalibration cycling or are reallocated to less demanding applications. This screening method ensures consistency in phase-transition behavior across modules, improving full-pack performance under heavy-duty load profiles.

### Guidance

As required, detailed embodiments of the present disclosure are disclosed herein; however, it is to be understood that the disclosed embodiments are merely exemplary of the disclosure that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present disclosure.

The foregoing disclosure provides illustration and description but is not intended to be exhaustive or to limit the implementations to the precise form disclosed. Modifications may be made in light of the above disclosure or may be acquired from practice of the implementations. As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein. As used herein, satisfying a threshold may, depending on the context, refer to a value being greater than the threshold, greater than or equal to the threshold, less than the threshold, less than or equal to the threshold, equal to the threshold, and/or the like, depending on the context. Although particular combinations of features are recited in the claims and/or disclosed in the specification, these combinations are not intended to limit the disclosure of various implementations. In fact, many of these features may be combined in ways not specifically recited in the claims and/or disclosed in the specification.

Although each dependent claim listed below may directly depend on only one claim, the disclosure of various implementations includes each dependent claim in combination with every other claim in the claim set. No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

### Interpretation and Equivalence

The embodiments described herein are illustrative and not limiting. Structural and functional features disclosed in connection with any embodiment may be combined, substituted, or rearranged with features of other embodiments unless expressly stated otherwise. Figures depicting LMFP discharge characteristics, blended-material behavior, control-sequence logic, or electrode/pack configurations are provided to facilitate understanding of representative implementations and are not intended to reflect exact operating values, precise geometries, or strict scaling relationships. Relative dimensions, proportions, electrode-layer counts, coating thicknesses, and material ratios are schematic unless otherwise indicated and may vary depending on manufacturing constraints, cell format, or target performance requirements of an LMFP-based battery system.

Terminology such as "set," "arrangement," "module," or "assembly" encompasses one or more components unless a singular form is clearly required by context. Terms such as "configured to," "arranged to," "adapted to," and "structured to" refer to functional capability rather than a particular mechanism, manufacturing technique, or material formulation. The inventive concepts presented herein describe relationships between structure, electrochemical function, and system-level behavior, and are not limited to any specific geometric form, electrode architecture, or restrictive compositional profile. Design alternatives, equivalent substitutions, adjustments in electrode architecture, and variations in control strategy that achieve substantially similar technical effects fall within the scope of the present disclosure.

### Range and Dimensional Interpretation

All numerical values and ranges disclosed herein-including cathode-material ratios, electrode thicknesses, porosity levels, calendaring densities, state-of-charge (SOC) increments, voltage-transition widths, and phase-dependent diffusivity parameters-should be understood as allowing for reasonable variation, manufacturing tolerances, and equivalents recognized in the art. Unless otherwise specified, the term "about," when associated with a numerical quantity, denotes a permissible variation of approximately ±10% of the referenced magnitude.

Ranges such as "1:1 to 3:1 blend ratio," "5-20 µm coating thickness," or "less than 5% voltage deviation across phases" encompass all subranges and intermediate values as well as all equivalents achieving similar electrochemical performance. Descriptive comparisons such as "higher Fe content," "broader voltage plateau," "faster diffusivity phase," or "enhanced transition smoothness" are to be interpreted relative to the embodiment or material referenced and are not limited to strict numerical boundaries unless explicitly defined.

Drawings, process diagrams, graphs, and cross-sections are representative examples. Actual layer thicknesses, electrode alignments, pack-level interconnect routing, and thermal-management geometries may vary depending on slurry formulation, coating and calendaring equipment, stacking alignment precision, weld tolerances, or system-integration requirements. Features illustrated as discrete may be fabricated integrally, and features shown as continuous may include transitions or interfaces omitted for clarity.

### Cross-Applicability and Functional Breadth

Although many embodiments emphasize LMFP cathode systems, blended-chemistry formulations, or dual-electrode-stack architectures, the inventive principles described herein are applicable across a broad range of lithium-ion systems exhibiting multiphase behavior or requiring enhanced voltage-transition stability. These principles extend to cell-to-pack and cell-to-module architectures, blade-style cells, stationary storage modules, commercial vehicle platforms, heavy-duty drivetrains, marine and aviation auxiliary units, and hybrid EV/HEV battery systems.

The functional concepts-such as smoothing multiphase voltage transitions, harmonizing reaction kinetics, improving SOC estimation, mitigating plateau-induced instability, or enabling pack-level balancing algorithms for mixed-chemistry cells-are transferable to other chemistries that exhibit analogous phase or plateau characteristics. Mechanisms that promote operational integrity (e.g., thermal stability, voltage-transition smoothing, diffusivity harmonization) or structural integrity (e.g., stable electrode interfaces, uniform mechanical stack pressure, reduced interlayer shear) can be adapted to differing system architectures without departing from the scope of the inventive principles.

### Manufacturing Flexibility

The inventive structures and processes disclosed herein are compatible with a wide range of electrode materials, slurry compositions, coating methods, and cell-assembly techniques. Although LMFP-LMFP and LMFP-blended cathodes are described in detail, equivalent functional behavior may be achieved through blending LMFP with other compatible phosphate chemistries, employing dual-stack electrodes, or implementing mixed-chemistry cells at the pack level.

Electrode fabrication may utilize doctor-blade, slot-die, gravure, or extrusion coating, with calendaring density, binder chemistry, conductive-additive loading, and solvent systems tailored to achieve the desired phase ratios and diffusivity profiles. Cell assembly may employ stacked prismatic or pouch formats, wound cylindrical formats, or hybrid configurations.

Thermal-management strategies-including liquid-cooled plates, vapor-chamber or foam-based heat spreaders, and phase-change thermal buffers-may be selected to manage the thermal characteristics of blended LMFP phases. Automated or inline manufacturing controls, such as impedance trending, vision-based electrode inspection, coating uniformity checks, or formation-cycle profiling, may be used to verify interphase consistency, reaction-rate harmonization, and plateau-transition behavior.

### Validation, Inspection, and Serviceability

Cells, modules, or packs incorporating the disclosed concepts may be validated using electrochemical, mechanical, thermal, or optical diagnostic techniques. Suitable validation approaches include impedance spectroscopy, differential capacity analysis, X-ray CT, ultrasound inspection, thermal imaging, or accelerated cycling. Validation may confirm blended-phase reaction behavior, smoother and more predictable voltage-transition regions, balanced diffusivity across LMFP phases, improved plateau stability, and SOC estimation consistency under dynamic load.

Modular pack architectures may support submodule-level validation, replacement, or reconfiguration without full-pack disassembly. Such modularity promotes scalable manufacturing, fleet-level serviceability, and improved quality control by enabling localized rework of cells or modules incorporating blended-chemistry structures or multiphase-transition features.

Systems and methods are disclosed herein for recovering lithium inventory and extending the operational life of lithium manganese iron phosphate (LMFP) batteries exhibiting multiphase electrochemical behavior. In example implementations, a battery cell configured with LMFP cathode materials having phase-dependent lithium transport characteristics undergoes a controlled recovery operation initiated in response to aging indicators. The recovery operation includes regulating the battery cell to a defined elevated temperature range for at least one phase of a multiphase reaction and directing a charging process while the cell is within the temperature range to promote lithium-ion migration from less accessible regions to active electrochemical sites. In some implementations, the charging process includes a low-rate charge followed by a normal-rate discharge. The disclosed techniques may be implemented by a battery management system and are applicable to vehicle, industrial, and stationary energy storage systems to improve capacity retention, operational stability, and lifecycle performance of aged LMFP batteries.

Accordingly, the examples and embodiments described herein illustrate flexible, scalable, and cross-applicable design principles consistent with the inventive concept of improving LMFP battery performance by smoothing multiphase voltage transitions through material blending, electrode-level structuring, and pack-level control.

## Claims

1. A method of operating a lithium-ion battery cell including a cathode active material having a blended lithium manganese iron phosphate composition defining at least two electrochemical phases, the method comprising:
controlling a charge or discharge current applied to the battery cell based on a monitored cell voltage to guide a transition between the electrochemical phases;
adjusting the charge or discharge current to reduce deviation in the monitored cell voltage during the transition between the electrochemical phases; and
establishing an updated state-of-charge estimate for the battery cell based on the reduced deviation in the monitored cell voltage.

2. The method of claim 1, wherein the cathode active material includes a manganese-enriched phase and an iron-enriched phase, and the controlling comprises harmonizing reaction kinetics between the manganese-enriched phase and the iron-enriched phase.

3. The method of claim 1 or 2, further comprising pre-conditioning the battery cell to a target temperature of at least 35 °C prior to controlling the charge or discharge current, the preconditioning improving ion-transport characteristics during the transition between the electrochemical phases.

4. The method of any of the preceding claims, wherein the adjusting comprises applying a low-current charge profile at or below C/10 to re-engage slower diffusion pathways and promote a continuous voltage transition between the electrochemical phases.

5. The method of any of the preceding claims, wherein establishing the updated state-of-charge estimate comprises evaluating a plateau-transition region of the monitored cell voltage to determine a transition-shape metric indicative of blended-phase behavior.

6. The method of any of the preceding claims, further comprising detecting a deviation in the monitored cell voltage exceeding a threshold representative of an abrupt plateau transition, and reducing the applied current until the deviation falls below the threshold.

7. The method of any of the preceding claims, further comprising determining an impedance value for the battery cell during the transition between the electrochemical phases and modifying the adjusting based on the impedance value.

8. The method of any of the preceding claims, wherein the controlling comprises synchronizing the transition between the electrochemical phases across a plurality of battery cells included in a battery module.

9. The method of claim 8, further comprising allocating balancing current among the plurality of battery cells based on differences in transition-shape metrics corresponding to the monitored cell voltages.

10. The method of any of the preceding claims, wherein the adjusting comprises compensating for manufacturing variation in cathode-material ratios by modifying the charge or discharge current to achieve a substantially uniform voltage-transition width across a population of battery cells.

11. The method of any of the preceding claims, further comprising performing a formation or recovery cycle including the controlling and adjusting, the formation or recovery cycle being operable to increase accessible capacity by smoothing the transition between the electrochemical phases.

12. The method of any of the preceding claims, wherein the controlling comprises executing a transition-smoothing algorithm that identifies an onset of the transition between the electrochemical phases and initiates the adjusting in response thereto.

13. The method of claim 12, wherein the transition-smoothing algorithm is further operable to classify a phase-transition region based on voltage-gradient patterns and to modify the adjusting in accordance with the classification.

14. A non-transitory computer-readable medium storing instructions which, when executed by a processor of a battery management system, cause the processor to carry out the method of any one of claims 1 to 13.

15. A battery system comprising the non-transitory computer-readable medium of claim 14 and a battery management system including the processor configured to execute the stored instructions, and/or the battery system being operable to control operation of at least one lithium-ion battery cell having a blended lithium manganese iron phosphate cathode active material such that the battery system performs the method of any one of claims 1 to 13.
